# EUROPEAN PATENT SPECIFICATION

(11) **EP 1 722 589 B1**
(45) Date of publication and mention of the grant of the patent: **19.02.2020**
(21) Application number: 06009984.3
(22) Date of filing: 15.05.2006
(51) Int. Cl.: H04L 9/32, H04L 29/06, H04W 4/06, H04W 8/26, H04W 12/04, H04W 12/06, H04W 88/08

(54) **Authentication method for wireless distributed system**
Authentifizierungsverfahren für ein drahtloses verteiltes System
Procédé d'authentification pour un système distribué sans fil

(30) Priority: 13.05.2005 US 680584 P; 08.05.2006 KR 20060041227
(43) Date of publication of application: 15.11.2006
(73) Proprietor: Samsung Electronics Co., Ltd., Suwon-si, Gyeonggi-do, 443-742 (KR); The University of Maryland College Park, College Park, MD 20742 (US)
(72) Inventor: Lee, In-Sun, Yeongtong-gu, Suwon-si, Gyeonggi-do (KR); Yun, Sang-Boh, Yeongtong-gu, Suwon-si, Gyeonggi-do (KR); Arbaugh, William Albert, Ellicott City, MD 21042 (US); Clancy, T. Charles,, College Park, MD 20742 (US); Shin, Min-Ho, Laurel, MD 20707 (US)
(74) Representative: Grünecker Patent- und Rechtsanwälte PartG mbB

(56) References cited:
- US-A1- 2004 098 586
- US-A1- 2004 103 282
- HAN SANG KIM ET AL: "Trust-Propagation Based Authentication Protocol in Multihop Wireless Home Networks", COMMUNICATION SYSTEM SOFTWARE AND MIDDLEWARE, 2006. COMSWARE 2006. FIR ST INTERNATIONAL CONFERENCE ON NEW DELHI, INDIA 08-12 JAN. 2006, PISCATAWAY, NJ, USA,IEEE, 8 January 2006 (2006-01-08), pages 1-5, XP010932369, ISBN: 978-0-7803-9575-6

## Description

### BACKGROUND OF INVENTION

### 1. Field of the Invention

The present invention relates generally to a wireless distribution system and, in particular, to an authentication method for a multi-hop wireless distribution system.

### 2. Background of the Related Art

A system in networking to control what resources network devices can access is called an authentication, authorization and accounting (AAA) system. In the context of AAA systems, network devices that attempt to gain access to network resources are generally referred to as "supplicants." Typically, system users cause supplicants to request access to particular resources. However, supplicants may also self-initiate access attempts for particular resources. These supplicants typically consist of laptops, desktop PCs, IP phones, virtual private network (VPN) clients, handheld devices, and any other device that may request access to a network resource.

AAA systems include AAA clients and AAA servers. In AAA systems, supplicants typically attempt to gain access to network resources through AAA clients. AAA clients normally reside on network elements such as network access servers (NAS), routers, switches, firewalls, virtual private network (VPN) concentrators, and wireless access points (WAPs). However, AAA clients can reside on any device that facilitates access to network resources. The supplicants attempts are sent to the AAA client, which in turn generates and issues access requests to an AAA server. Typically, AAA servers handle access requests sent by AAA clients to access network resources by maintaining a database of user profiles, querying the database against access requests to verify authenticity, determining resources authorized for use, and accounting for the use of network resources. Communication between the AAA client and AAA server is facilitated via an AAA message protocol such as a Remote Authentication Dial-In User Service (RADIUS) and a Terminal Access Controller Access Control Systems protocol (TACACS+).

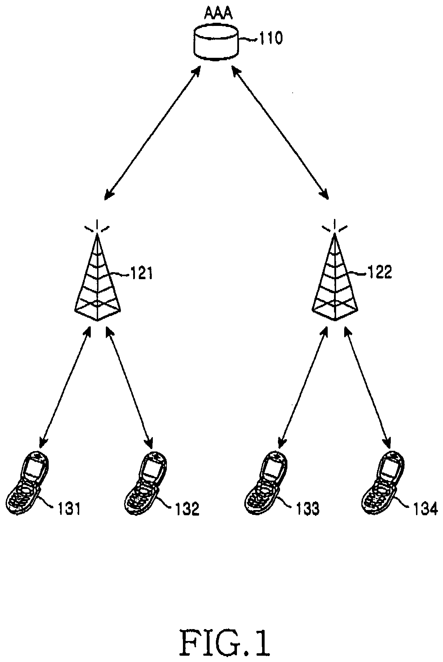

FIG. 1 is a diagram illustrating a conventional AAA system, in which the base stations (BSs) 121 and 122 perform authentication procedures by exchanging messages with mobile stations (MSs) 131, 132, 133, and 134 and an AAA server 110 upon receiving access requests from the MSs 131, 132, 133, and 134. In this conventional AAA system, the authorization function is centralized to the AAA server 110 such that the BSs 121 and 122 do not involve the creation of keys for the MS 131, 132, 133, and 134.

However, the conventional AAA protocol is not appropriate for multi-hop wireless distribution system since the additional relay base stations (RBSs) are required as the number of the MSs increases. Also, the conventional AAA system has some drawbacks in that the MS should be registered to the central manager in initial registration, and the installment of the additional BS is complex since the MS should be registered to the central manager. Even in the system having no AAA server, the main BS suffers processing burden since the main BS should make the role of the central manager.

Examples of the state of the art in present technical field are disclosed in documents US 2004/0098586 A1 and US 2004/0103282 A1.

### SUMMARY OF THE INVENTION

It is therefore an object of the present invention to solve the above problems. Accordingly, it is an object of the present invention to provide an authentication method of wireless distribution system which is capable of being supported by multi-hop-away base stations. The objects of present invention are achieved by means of the appended set of claims.

It is another object of the present invention to provide an authentication method of wireless distribution system which is capable of establishing a shared secret between the base station and the mobile stations without involvement of the AAA server.

It is still another object of the present invention to provide an authentication method of wireless distribution system, which allows for easily extending the network by adding base stations without loss of the security degree and additional labor burden for the operator.

It is still yet another object of the present invention to provide an authentication method of wireless distribution system, which is capable of easily joining at least two isolated systems by establishing a single shared secret between the connecting base stations.

The above objects are achieved with the authentication method of wireless distribution system including at least one base station providing access service to mobile stations in a coverage of the base station. The authentication method includes receiving, at an unregistered base station, an authentication request from a mobile station; multicasting over the wireless distribution system an identity request for identifying the mobile station; receiving identity responses from at least one base station in response to the identity request; and performing authentication of the mobile station based on the identity responses.

Preferably, the step of performing the authentication of the mobile station includes determining whether there are base stations one hop away from the unregistered base station and performing a neighbor-supported authentication if there is at least one one-hop-away base station.

Preferably, the step of performing the authentication of the mobile station further includes performing multi-hop-supported authentication if there is no one--hop-away base station.

Preferably, the step of performing the neighbor-supported authentication includes determining whether or not a number of the one-hop-away base stations is greater than 1, selecting one one-hop-away base station from among the one-hop-away base stations as a target base station if the number of the one-hop-away base stations is greater than 1, and creating a session key shared with the MS on the basis of the identity response received from the target base station.

Preferably, the step of performing the neighbor-supported authentication further includes determining the one-hop-away base station as a target base station if the number of the one-hop-away base stations is not greater than 1.

Preferably, the step of creating the session key includes forwarding the identity response received from the target base station to the mobile station, receiving a transaction request from the MS in response to the identity response, forwarding the transaction request to the target base station, receiving a transaction response from the target base station in response to the transaction request, forwarding the transaction response to the MS, and computing, at the unregistered base station and the mobile terminal, the session key using the transaction response.

Preferably, the transaction request includes a transaction identifier chosen by the mobile station, a mobile station identifier (ID), an unregistered base station ID, a target base station ID, and a secret shared between the target base station and the mobile station. Preferably, the transaction identifier is 256 bits long.

Preferably, the secret shared between the target base station and the mobile station is encrypted with nonces chosen by the mobile terminal and the target base station, the transaction identifier, the mobile station ID, the unregistered base station ID, and the target base station ID. Preferably, each nonce is 256 bits long.

Preferably, the transaction request further includes a secret shared between the target base station and the unregistered base station.
Preferably, the secret shared between the target base station and the unregistered base station is encrypted with nonces chosen by the unregistered base station and the target base station, the transaction identifier, the target base station ID, the mobile station ID, and the unregistered base station ID.

Preferably, the step of receiving the transaction response from the target base station includes computing, at the target base station, a session key, and transmitting the session key with the transaction response. Preferably, the transaction response includes a secret shared between the target base station and the unregistered base station and a secret shared between the target base station and the mobile station. Preferably, the secret between the target base station and the unregistered base station is encrypted with a nonce chosen by the mobile station, a target base station ID, a mobile station ID, and an unregistered base station ID.

Preferably, the secret between the target base station and the mobile station is encrypted with a nonce chosen by the unregistered base station, a target base station ID, a mobile station ID, and an unregistered base station ID.

Preferably, the transaction response includes a secret shared between the target base station and the mobile station.

Preferably, the secret between the target base station and the mobile station is encrypted with a nonce chosen by the unregistered base station, a target base station ID, a mobile station ID, an unregistered base station ID.

Preferably, the step of performing the multi-hop-supported authentication includes determining whether a number of the multi-hop-away base station is greater than 1, selecting the base station transmitting the identity response as the target base station if the multi-hop-away base station is not greater than 1, determining whether the target base station has a secret shared with the unregistered base station, and creating a session key shared with the mobile station on the basis of the identity response received from the target base station if the target base station has the secret shared with the unregistered base station.

Preferably, the step of performing the multi-hop-supported authentication further includes establishing a secret to be shared with the target base station if the multi-hop away base station has no secret shared with the unregistered base station.

Preferably, the step of performing the multi-hop-supported authentication further includes determining whether there is any base station having a secret sharing with the unregistered base station among the multi-hop-away base stations transmitted the identity responses if the number of multi-hop-away base station is greater than 1, and selecting one among the multi-hop-away base stations having the secret shared with the unregistered base stations as the target base station if there is at least one multi-hop-away base station sharing the secret with the unregistered base station.

Preferably, the step of performing the multi-hop-supported authentication further includes selecting a closest base station among the multi-hop-away base stations as the target base station if the there is no multi-hop-away base station sharing a secret with the unregistered base station.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a diagram illustrating a conventional AAA system;
FIG. 2 is a diagram illustrating a wireless distributed authentication system according to the present invention;
FIG. 3 is a diagram illustrating a neighbor-supported authentication according to the present invention;
FIG. 4 is a message flow diagram for illustrating the neighbor-supported authentication method according to the present invention;
FIG. 5 is a diagram illustrating a multi-hop-supported authentication according to the present invention;
FIG. 6 is a flowchart illustrating a wireless distributed authentication method according to the present invention;
FIG. 7 is a flowchart illustrating the neighbor-supported authentication procedure of FIG. 6 in detail; and
FIG. 8 is a flowchart illustrating the multi-hop-supported authentication procedure of FIG. 6 in detail.

### DETAILED DESCRIPTION OF THE PREFERRED EMBODIMENT

Preferred embodiments of the present invention will be described below with reference to the accompanying drawings.. In the following description of the present invention, detailed descriptions of well-known functions and structures incorporated herein will be omitted when it may obscure the subject matter of the present invention in unnecessary detail.

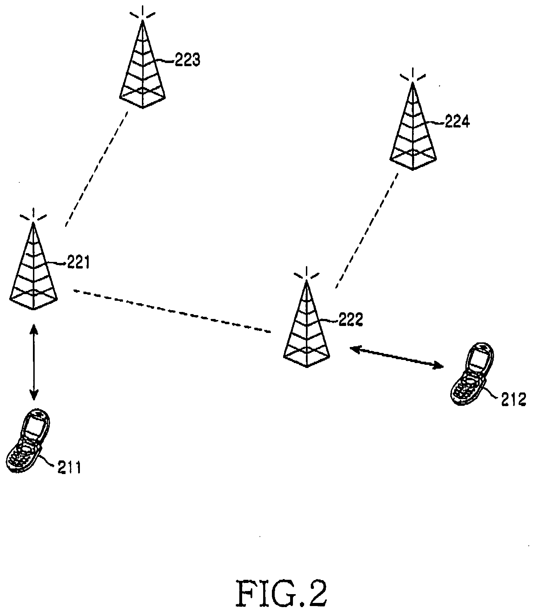

FIG. 2 is a diagram illustrating a wireless distributed system according to an embodiment of the present invention. As shown in FIG. 2, the wireless distributed system includes 4 base stations 221, 222, 223, and 224, and the mobile terminals 211 and 212 are registered to the nearest base stations 221 and 222, respectively, in an initial registration. That is, each base station as the authenticator such that the authentication functions are distributed acts among the base stations.

In the wireless distributed system of FIG. 2, two scenarios can be considered. The first is when the mobile station requests association with a base station with which it shares a security association which may be either a shared secret or a public key certificate derived from a common authority. The second is when the mobile station request association with a base station with which it doesn't share a secret. In the first scenario, the 802.11i protocol (or other key derivation protocol) and the extensible authentication protocol (EAP) are used. In the second scenario, the authentication method of the present invention can be operated in conjunction with the 802.11i protocol (or other key derivation protocol).

Initially the authentication procedure without a common security association will be described. When the mobile station requires to associate with a base station which does not share a secret, the base station broadcasts the identification of the mobile station to the wireless distribution system (WDS) for identifying a base station sharing the secret within the WDS. If no base station is found, then the mobile station cannot be authenticated. In case that the base station sharing the secret is found, the authenticating base station may be one-hop, i.e., at least a neighbor away from the requesting base station. In this embodiment, the authentication procedure will be explained in two cases: the neighbor-supported authentication in which the authenticating base station is one-hop-away from requesting base station and the multi-hop-supported authentication in which the authenticating base station is more than one hop from the requesting base station.

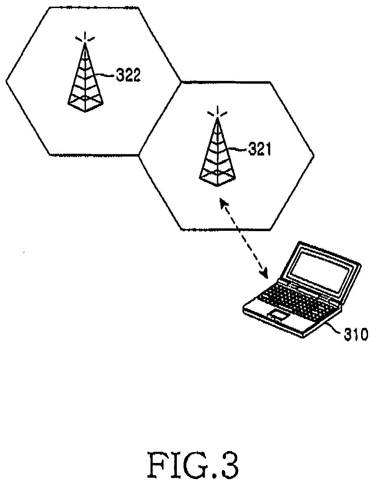

FIG. 3 is a diagram illustrating a neighbor-supported authentication according to the present invention. As shown in FIG. 3, the base station 321 finds a neighbor base station 322 for authenticating the mobile station 310.

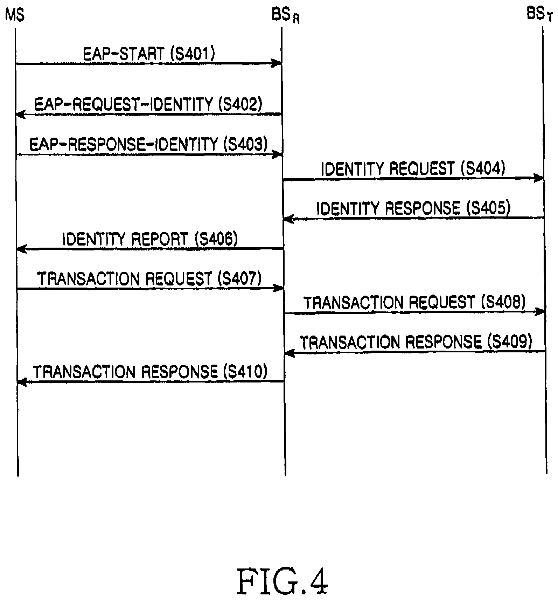

When a neighbor base station 322 shares a secret with the mobile station 310 and the mobile station 321 shares a secret with the neighbor base station 322 , a modified Otway-Reese protocol using EAP can be used for authenticating the mobile station and derive a new fresh secret between the base station 321 and the mobile station 310. FIG. 4 is a message flow diagram for illustrating the neighbor-supported authentication according to the present invention.

Referring to FIG. 4, upon receiving an EAP-START message from the MS at step S401, a base station BS_{R} having the relay function returns an EAP-REQUEST-IDENTITY message to the MS at step S402. In response to the EAP-REQUEST-IDENTITY message, the MS transmits EAP-RESPONSE-IDENTITY message to the BS_{R} at step S403.

Upon receiving the EAP-RESPONSE-IDENTITY message, the BS_{R} multicasts an Identity Request message over the wireless distributed system (WDS) for finding a target base station BS_{T} to which the MS is previously registered for sharing the secret with the MS at step S404.

Once receiving the Identity Request message, the BS_{T} transmits Identity Response message including the ID of BS_{T}, an encryption *E*_{*K*_{*T*↔*MS*}}(*N_{T},T*) of a key shared between the BS_{T} and the MS, and an encryption of key shared between the BS_{T} and BS_{R} *E*_{*K*_{*T*↔*R*}}(*N_{T},T*) at step S405. E is an AES-CCM encryption, K is a session key that is generated by BS_{T}, N_{T} is 256 bit nonces chosen by BS_{T}.

After receiving the Identity Response message, the BS_{R} transmits an Identity Report message to the MS at step S406. The Identity Reponse message includes the ID of BS_{T} and the key encryption *E*_{*K*_{*T*↔*MS*}}(*N_{T},T*) shared between the BS_{T} and the MS.

Sequentially, the MS transmits a Transaction Request message, to the BS_{T}, including a 256 bit transaction identifier chosen by MS, MS ID, BS_{R} ID, BS_{T} ID, and the key encryption *E*_{*K*_{*T*↔*MS*}}(*N_{MS},N_{T},M,MS,BS_{R},BS_{T},T*), at step S407. BS_{R} forwards the Transaction Request message, to the BS_{T}, together with the encryption *E*_{*K*_{*T*↔*R*}}(*N_{MS},N_{T},M,T,MS,BS_{T}*) of key between the BS_{R} and BS_{T} at step S408. Upon receiving the Transaction Request message, BS_{T} computes the session key k with the TLS-PRF: k=TLS-PRF(M,N_{MS}, N_{T}, N_{R}), and then transmits a Transaction Response message including the key encryptions *E*_{*K*_{*T*↔*R*}}(*N_{MS},T,MS,BS_{T}*) and *E*_{*K*_{*T*↔*MS*}}(*N_{R}*,*T*,*MS*,*BS_{T}*) to BS_{R} at step S409. The BS_{R} forwards the transaction Response containing only the key encryption *E*_{*K*_{*T*↔*MS*}}(*N_{R}*,*T*,*MS*,*BS_{T}*) to MS at step S410. Consequentially, BS_{R} and MS compute k: k= TLS-PRF(M,N_{MS}, N_{T}, N_{R}).

After completion of the above procedure, the BS_{R} and MS perform the IEEE 802.11 i four-way handshake to ensure that only the BS_{R} and the MS know the derived session key.

If more than one BSs response to the BS_{R}, the BS_{R} may use any algorithm to select the BS_{T}.

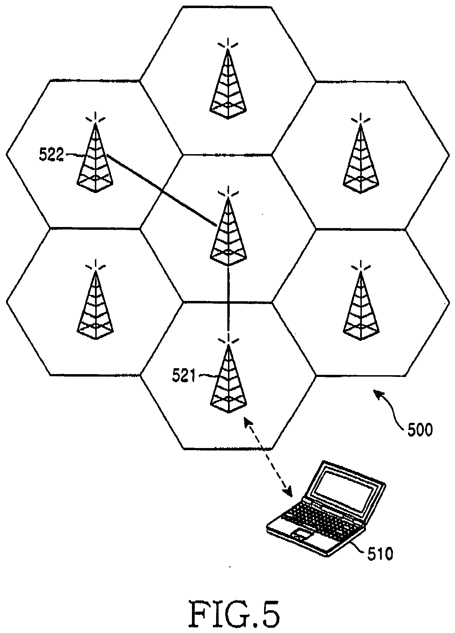

FIG. 5 is a diagram illustrating a multi-hop-supported authentication according to the present invention. As shown in FIG. 5, a BS_{T} 522 is found at more than one-hop-away from the BS_{R} 521 in a WDS 500.

When the authenticating BS_{T} is more than one-hop-away, a secret *K*_{*T*≪ *R*} between the BS_{T} and the BS_{R} must be established (if it does not exist) for deriving a new fresh secret between the BS_{R} 521 and a MS 510. As in the neighbor-supported authentication, the MS and the BS_{T} must share a secret *K*_{*T*≪ *MS*}.

If these two preconditions are satisfied, then the multi-hop-supported authentication algorithm works exactly as in the neighbor-supported authentication. If the two preconditions are not satisfied, the multi-hop-supported authentication algorithm must fail with the proper EAP failure message.

When a BS_{R} does not share a secret with an MS requesting authentication, the BS_{R} must broadcast an identification of the MS to the neighbor BSs with a vendor dependent hop-count. Each neighbor BS in turn decrements the hop-count and forwards the message to its neighbors. If a member of the WDS receives a second duplicate of the message, it discards the message.

When a BS sharing a secret with the MS receives the broadcast message, the BS must responds to the requesting BS_{R}. If the BS_{R} receives the responses to its broadcast message, it selects the BS which already shares a secret as the BS_{T}. On the other hand, if the BS_{R} does not share a secret with any of the responding BSs, then it selects the closest BS responded to the broadcast message as the BS_{T} and establishes a secret to be shared with the BS_{T} before responding to the MS.

In case that the MS sees that some BSs share a secret with the BS_{R}, the MS caches the result and transmits the request message in unicast rather than multicast. If the BS_{R} see that some BSs shares a secret with the MS, the BS_{R} caches the result and unicasts the request message to the BSs in next transmission. Also, the BS_{R} can cache the result of the authentication of the MS. When the MS attempts to access the BS_{R} having the authentication result, the BS_{R} can authenticate the MS directly via traditional EAP.

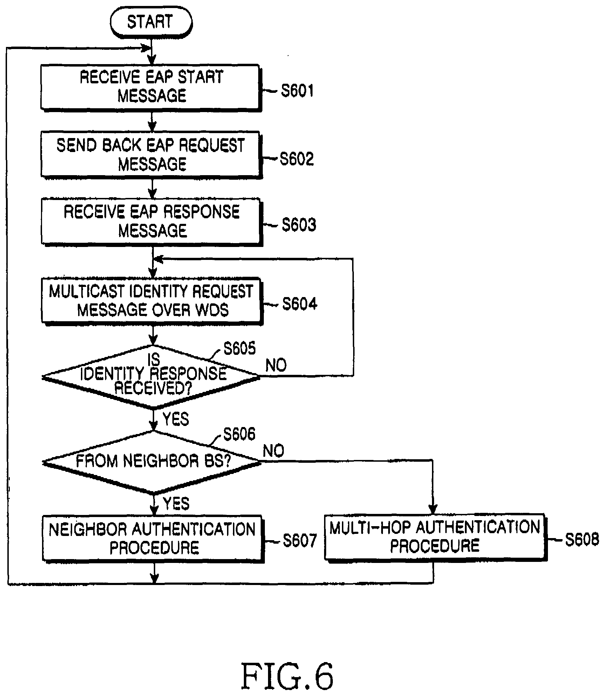

Fig. 6 is a flowchart illustrating a distributed authentication method according to the present invention. Referring to FIG. 6, once the BS_{R} receives an EAP-START message from a MS at step S601, it transmits an EAP Request message back to the MS at step S602 and receives an EAP Response message from the MS in response to the EAP Request message at step S603. Upon receiving the EAP Response message, the BS_{R} multicasts an Identity Request message over WDS for locating a BS_{T} at step S604. After multicasting the Identity Request message, the BS_{R} determines whether any Identity Response message is received at step S605. If there is no Identity response message in a predetermined period, the BS_{R} retransmit the Identity Request message. The retransmission is executed out in predetermined times. If the Identity Response message is received from at least one BS, the BS_{R} determines whether there is BS which is one-hop-away from BS_{R} among the BSs transmitting the identity Response message, i.e., neighbor BS, at step S606. If there is a neighbor BS, the BS_{R} performs a Neighbor-supported authentication procedure at step S607. Otherwise, the BS_{R} performs Multi-hop-supported authentication procedure at step S608.

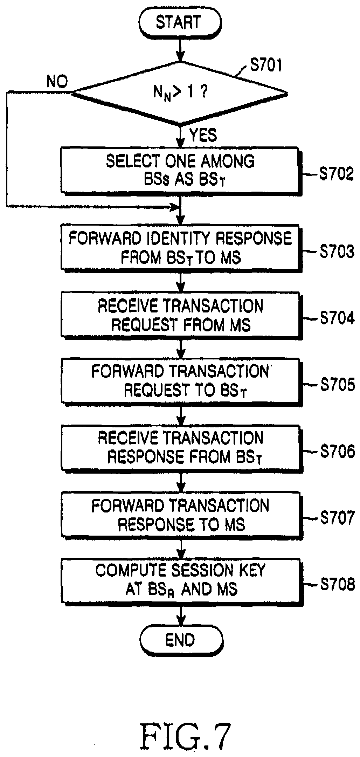

FIG. 7 is a flowchart illustrating the neighbor-supported authentication procedure of FIG. 6 in detail. Referring to FIG. 7, once the BS_{R} enters the neighbor-supported authentication procedure, it counts the number N_{N} of the neighbor BS transmitting the Identity Response and determines whether N_{N} message is greater than 1 at step S701. If N_{N} is greater than 1, the BS_{R} selects one among the BSs as BS_{T} at step S702. The BS_{T} selection can be carried out with various selection algorithms. Once the BS_{T} is selected, the BS_{R} forwards the Identity Response received from the BS_{T} to the MS at step S703.

Sequentially, the BS_{R} receives a Transaction Request message from the MS at step S704. The Transaction Request message includes a 256 bit transaction identifier chosen by MS, MS ID, BS_{R} ID, BS_{T} ID, and the key encryption *E*_{*K*_{*T*↔*MS*}}(*N_{MS}*,*N_{T}*,*M*,*MS*,*BS_{R}*,*BS_{T}*,*T*).Thereafter, the BS_{R} transmits the Transaction Request message to the BS_{T} at step S705. The transmitted Transaction Request message further includes the encryption *E*_{*K*_{*T*↔*R*}}(*N_{MS}*,*N_{T}*,*M*,*T*,*MS*,*BS_{T}*) of key between the BS_{R} and BS_{T}.
Upon receiving the Transaction Request message, BS_{T} computes the session key k with the TLS-PRF: k=TLS-PRF(M,N_{MS}, N_{T}, N_{R}), and then transmits a Transaction Response message including the key encryptions *E*_{*K*_{*T*↔*R*}}(*N_{MS}*,*T*,*MS*,*BS_{T}*) and *E*_{*K*_{*T*↔*MS*}}(*N_{R}*,*T*,*MS*,*BS_{T}*), such that the BS_{R} receives the Transaction Response message at step S706 and then forwards the Transaction Response message to the MS at step S707. The forwarded Transaction Response message includes only the key encryptions *E*_{*K*_{*T*↔*MS*}}(*N_{R}*,*T*,*MS*,*BS_{T}*)*.* After transmitting the Transaction Response message, the BS_{R} computes session key at step S708. The session key is computed by the BS_{R} and MS at the same time as k= TLS-PRF(M,N_{MS}, N_{T}, N_{R}).

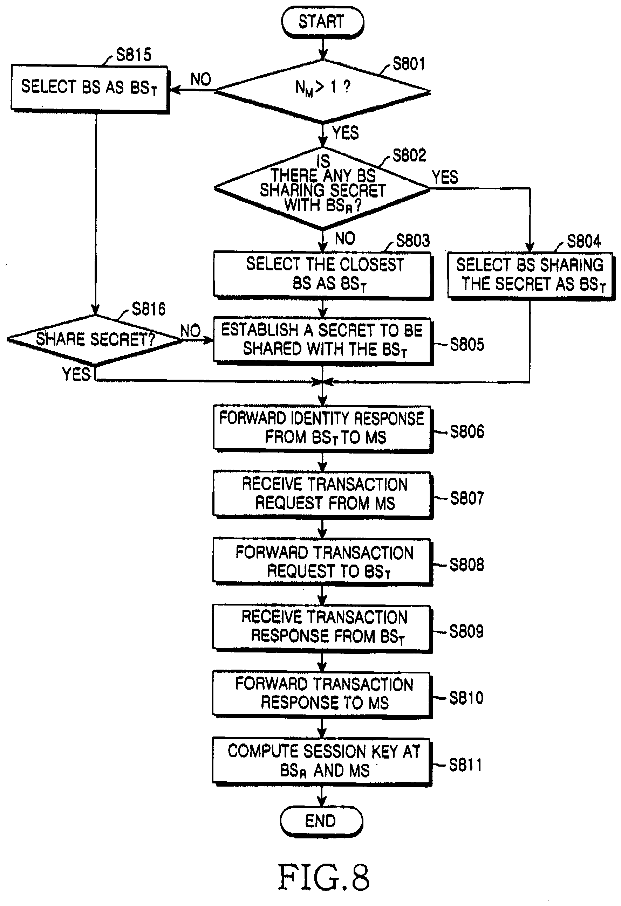

FIG. 8 is a flowchart illustrating the multi-hop-supported authentication procedure of FIG. 6 in detail. Referring to FIG. 8, once the BS_{R} enters the multi-hop-supported authentication procedure, it determines whether the number N_{M} of the multi-hop BS transmitting the Identity Response message is greater than 1 at step S801. If N_{M} is greater than 1, the BS_{R} determines whether there is any BS sharing a secret with itself at step S802. If there is any BS sharing a secret with the BS_{R}, the BS_{R} selects the BS sharing the secret with itself as the BS_{T} at step S804 and then transmits the Identity Response message received from the BS_{T} to the MS at step S806. In case that the number of BS sharing the secret is greater than 1, the BS_{R} can select one of the BSs as BS_{T} with a selection parameter such as hop count.

If there is no BS sharing a secret with the BS_{R} at step S802, the BS_{R} selects a closest BS among the BSs transmitting the Identity Response message as BS_{T} at step S803 and then establishes a secret shared with the BS_{T} at step S805. After establishing the secret, the BS_{R} forwards the Identity Response message received from the BS_{T} which shares the secret to the MS at step S806.

If it is determined that the N_{M} is not greater than 1 at step S801, the BS_{R} selects the only one BS transmitting the Identity Response message as the BS_{T} at step S815 and then determines whether or not the BS_{T} has a secret sharing with itself at step S816. If the BS_{T} has a secret sharing with the BS_{R}, the BS_{R} forwards the Identity Response message received from the BS_{T} to the MS at step S806.

On the other hand, if the BS_{T} does not have a secret sharing with the BS_{R}, the BS_{R} establish a secret to be shared with the BS_{T} at step S805 and then forwards the Identity Response message received from the BS_{T} to the MS at step S806.

After forwarding the Identity Response message, the BS_{R} waits and receives a Transaction Request message from the MS at step S807. The Transaction Request message includes a 256 bit transaction identifier chosen by MS, MS ID, BS_{R} ID, BS_{T} ID, and the key encryption *E*_{*K*_{*T*↔*MS*}}(*N_{MS}*,*N_{T}*,*M*,*MS*,*BS_{R}*,*BS_{T}*,*T*). Thereafter, the BS_{R} forwards the Transaction Request message to the BS_{T} at step S808. The forwarded Transaction Request message further includes the encryption *E*_{*K*_{*T*↔*R*}}(*N_{MS}*,*N_{T}*,*M*,*T*,*MS*,*BS_{T}*) of key between the BS_{R} and BS_{T}. Upon receiving the Transaction Request message, BS_{T} computes the session key k with the TLS-PRF: k=TLS-PRF(M,N_{MS}, N_{T}, N_{R}), and then transmits a Transaction Response message including the key encryptions *E*_{*K*_{*T*↔*R*}}(*N_{MS}*,*T*,*MS*,*BS_{T}*) and *E*_{*K*_{*T*↔*MS*}}(*N_{R}*,*T*,*MS*,*BS_{T}*), such that the BS_{R} receives the Transaction Response message at step S809 and then forwards the Transaction Response message to the MS at step S810. The forwarded Transaction Response message includes only the key encryptions *E*_{*K*_{*T*↔*MS*}}(*N_{R}*,*T*,*MS*,*BS_{T}*)*.* After transmitting the Transaction Response message, the BS_{R} computes session key at step S811. The session key is computed by the BS_{R} and MS at the same as k= TLS-PRF(M,N_{MS}, N_{T}, N_{R}).

While this invention has been described in connection with what is presently considered to be the most practical and preferred embodiments, it is to be understood that the invention is not limited to the disclosed embodiments, but, on the contrary, is intended to cover various modifications and equivalent arrangements included within the scope of the appended claims. As described above, the distributed authentication method of the present invention distributes the authentication management to the base stations such that it is possible to simplify the authentication procedure without a central manager such as AAA server.

Also, since the distributed authentication method of the present invention is performed without AAA server when a new base station is installed or isolated base stations are joined, it is possible to extend the network in an easy manner without degradation of the security degree and additional labor burden of the operator.

Furthermore, with the simplified authentication procedures without the central management device, the distributed authentication method of the present invention can join at least two isolated systems within a wireless distributed system by establishing a single shared secret between the two base stations.

## Claims

1. An authentication method for wireless distribution system (500) comprising:
receiving, by an unregistered base station (321, 521), an authentication request from a mobile station (310, 510) multicasting, by the unregistered base station an identity request for identifying the mobile station to a plurality of base stations in the wireless distribution system;
receiving, by the unregistered base station, an identity response from at least one base station (322, 522) among the plurality of base stations in response to the identity request; and
performing, by the unregistered base station, authentication of the mobile station on the basis of the identity response,
wherein performing the authentication of the mobile station includes:
determining whether the at least one base station is one-hop-away from the unregistered base station;
performing a neighbor-supported authentication if the at least one base station (322) is an one-hop-away base station; and
performing multi-hop-supported authentication if the at least one base station (522) is a more than two hops away base station.

2. The method of claim 1, wherein performing the neighbor-supported authentication includes:
determining whether a number of one-hop-away base stations is greater than 1;
selecting one from among the one-hop-away base stations as a target base station if the number of the one-hop-away base stations is greater than 1; and
creating a session key shared with the MS on the basis of the identity response received from the target base station.

3. The method of claim 2, wherein performing the neighbor-supported authentication further includes:
determining the one-hop-away base station as a target base station if the number of the one-hop-away base stations is not greater than 1.

4. The method of claim 3, wherein creating the session key includes:
transmitting the identity response received from the target base station to the mobile station;
receiving a transaction request from the MS in response to the identity response;
transmitting the transaction request to the target base station;
receiving a transaction response from the target base station in response to the transaction request;
transmitting the transaction response to the MS; and
computing, at the unregistered base station and the mobile terminal, the session key using the transaction response.

5. The method of claim 4, wherein the transaction request includes a transaction identifier chosen by the mobile station, a mobile station ID, an unregistered base station ID, a target base station ID, and a secret shared between the target base station and the mobile station.

6. The method of claim 5, wherein the transaction identifier is 256 bits long.

7. The method of claim 5, wherein the secret shared between the target base station and the mobile station is encrypted with nonces chosen by the mobile terminal and the target base station, the transaction identifier, the mobile station ID, the unregistered base station ID, and the target base station ID.

8. The method of claim 7, wherein each nonce is 256 bits long.

9. The method of claim 5, wherein the transaction request further includes a secret shared between the target base station and the unregistered base station.

10. The method of claim 9, wherein the secret shared between the target base station and the unregistered base station is encrypted with nonces chosen by the unregistered base station and the target base station, the transaction identifier, the target base station ID, the mobile station ID, and the unregistered base station ID.

11. The method of claim 4, wherein receiving the transaction response from the target base station includes:
computing, at the target base station, a session key; and
transmitting the session key with the transaction response.

12. The method of claim 11, wherein the transaction response includes a secret shared between the target base station and the unregistered base station and a secret shared between the target base station and the mobile station.

13. The method of claim 12, wherein the secret shared between the target base station and the unregistered base station is encrypted with a nonce chosen by the mobile station, a target base station ID, a mobile station ID, and an unregistered base station ID.

14. The method of claim 12, wherein the secret shared between the target base station and the mobile station is encrypted with a nonce chosen by the unregistered base station, a target base station ID, a mobile station ID, and an unregistered base station ID.

15. The method of claim 11, wherein the transaction response includes a secret shared between the target base station and the mobile station.

16. The method of claim 15, wherein the secret between the target base station and the mobile station is encrypted with a nonce chosen by the unregistered base station, a target base station ID, a mobile station ID, an unregistered base station ID.

17. The method of claim 1, wherein performing the multi-hop-supported authentication includes:
determining whether a number of the multi-hop-away base station is greater than 1;
selecting the base station transmitted the identity response as the target base station if the multi-hop-away base station is not greater than 1;
determining whether the target base station has a secret shared with the unregistered base station; and
creating a session key shared with the mobile station on the basis of the identity response received from the target base station if the target base station has the secret shared with the unregistered base station.

18. The method of claim 17, wherein performing the multi-hop-supported authentication further includes:
establishing a secret to be shared with the target base station if the multi-hop away base station has no secret shared with the unregistered base station.

19. The method of claim 18, wherein performing the multi-hop-supported authentication further includes:
determining whether there is any base station having a secret sharing with the unregistered base station among the multi-hop-away base stations transmitted the identity responses if the number of multi-hop-away base station is greater than 1; and
selecting one of the multi-hop-away base stations from among the multi-hop-away base stations having the secret shared with the unregistered base stations as the target base station if there is at least one multi-hop-away base station sharing the secret with the unregistered base station.

20. The method of claim 19, wherein performing the multi-hop-supported authentication further includes:
selecting a closest base station among the multi-hop-away base stations as the target base station if there is no multi-hop-away base station sharing a secret with the unregistered base station.

21. The method of claim 20, wherein creating the session key includes:
forwarding the identity response received from the target base station to the mobile station;
receiving a transaction request from the MS in response to the identity response;
forwarding the transaction request to the target base station;
receiving a transaction response from the target base station in response to the transaction request;
forwarding the transaction response to the MS; and
computing, at the unregistered base station and the mobile terminal, the session key using the transaction response.

22. The method of claim 21, wherein the transaction request includes a transaction identifier chosen by the mobile station, a mobile station ID, an unregistered base station ID, a target base station ID, and a secret shared between the target base station and the mobile station.

23. The method of claim 22, wherein the transaction identifier is 256 bits long.

24. The method of claim 22, wherein the secret shared between the target base station and the mobile station is encrypted with nonces chosen by the MS and the target base station, the transaction identifier, the mobile station ID, the unregistered base station ID, and the target base station ID.

25. The method of claim 24, wherein each nonce is 256 bits long.

26. The method of claim 22, wherein the transaction request further includes a secret shared between the target base station and the unregistered base station.

27. The method of claim 26, wherein the secret shared between the target base station and the unregistered base station is encrypted with nonces chosen by the unregistered base station and the target base station, the transaction identifier, the target base station ID, the mobile station ID, and the unregistered base station ID.

28. The method of claim 21, wherein receiving the transaction response from the target base station includes:
computing, at the target base station, a session key; and
transmitting the session key with the transaction response.

29. The method of claim 28, wherein the transaction response includes a secret shared between the target base station and the unregistered base station and a secret shared between the target base station and the mobile station.

30. The method of claim 29, wherein the secret shared between the target base station and the unregistered base station is encrypted with a nonce chosen by the mobile station, a target base station ID, a mobile station ID, an unregistered base station ID.

31. The method of claim 29, wherein the secret shared between the target base station and the mobile station is encrypted with a nonce chosen by the unregistered base station, a target base station ID, a mobile station ID, an unregistered base station ID.

32. The method of claim 28, wherein the transaction response includes a secret shared between the target base station and the mobile station.

33. The method of claim 32, wherein the secret shared between the target base station and the mobile station is encrypted with a nonce chosen by the unregistered base station, a target base station ID, a mobile station ID, an unregistered base station ID.

## Patentansprüche

1. Ein Authentifizierungsverfahren für ein drahtloses verteiltes System (500) umfassend:
Erhalten, durch eine nicht registrierte Basisstation (321, 521), einer Authentifizierungsanfrage von einer Mobilstation (310, 510);
Multicasten, durch die nicht registrierte Basisstation, einer Identitätsanfrage zur Identifizierung der Mobilstation an eine Vielzahl von Basisstationen im drahtlosen verteilten System;
Erhalten, durch die nicht registrierte Basisstation, einer Identitätsantwort von wenigstens einer Basisstation (322, 522) unter der Vielzahl an Basisstationen als Reaktion auf die Identitätsanfrage; und
Durchführen, durch die nicht registrierte Basisstation, der Authentifizierung der Mobilstation basierend auf der Identitätsantwort,
wobei das Durchführen der Authentifizierung der Mobilstation einschließt:
Bestimmen, ob die wenigstens eine Basisstation einen Sprung entfernt von der nicht registrierten Basisstation ist;
Durchführen einer nachbarunterstützten Authentifizierung, wenn die wenigstens eine Basisstation (322) eine einen Sprung entfernte Basisstation ist; und
Durchführen von mehrfachsprungunterstützter Authentifizierung, wenn die wenigstens eine Basisstation (522) eine mehr als zwei Sprünge entfernte Basisstation ist.

2. Das Verfahren aus Anspruch 1, wobei das Durchführen von nachbarunterstützter Authentifizierung einschließt:
Bestimmen, ob eine Anzahl von einem Sprung entfernter Basisstationen größer als 1 ist;
Wählen einer unter den einen Sprung entfernten Basisstationen als eine Zielbasisstation, wenn die Anzahl der einen Sprung entfernten Basisstationen größer als 1 ist; und
Erzeugen eines mit der MS geteilten Sitzungsschlüssels basierend auf der von der Zielbasisstation erhaltenen Identitätsantwort.

3. Das Verfahren aus Anspruch 2, wobei das Durchführen von nachbarunterstützter Authentifizierung ferner einschließt:
Bestimmen der einen Sprung entfernten Basisstation als eine Zielbasisstation, wenn die Anzahl der einen Sprung entfernten Basisstationen nicht größer als 1 ist.

4. Das Verfahren aus Anspruch 3, wobei das Erzeugen des Sitzungsschlüssels einschließt:
Übertragen der Identitätsantwort, die von der Zielbasisstation erhalten wurde, zur Mobilstation;
Erhalten einer Transaktionsanfrage von der MS als Reaktion auf die Identitätsantwort;
Übertragen der Transaktionsanfrage zur Zielbasisstation;
Erhalten einer Transaktionsantwort von der Zielbasisstation als Reaktion auf die Transaktionsanfrage;
Übertragen der Transaktionsantwort zur MS; und
Berechnen, in der nicht registrierten Basisstation und dem mobilen Endgerät, des Sitzungsschlüssels mithilfe der Transaktionsantwort.

5. Das Verfahren aus Anspruch 4, wobei die Transaktionsanfrage einen Transaktionsidentifizierer, gewählt durch die Mobilstation, eine Mobilstation ID, eine nicht registrierte Basisstation ID, eine Zielbasisstation ID, und ein Geheimnis, geteilt zwischen der Zielbasisstation und der Mobilstation, einschließt.

6. Das Verfahren aus Anspruch 5, wobei der Transaktionsidentifizierer 256 Bits lang ist.

7. Das Verfahren aus Anspruch 5, wobei das Geheimnis, geteilt zwischen der Zielbasisstation und der Mobilstation, mit Noncen verschlüsselt ist, die durch das mobile Endgerät und die Zielbasisstation, den Transaktionsidentifizierer, die Mobilstation ID, die nicht registrierte Basisstation ID und die Zielbasisstation ID gewählt wurden.

8. Das Verfahren aus Anspruch 7, wobei jede Nonce 256 Bits lang ist.

9. Das Verfahren aus Anspruch 5, wobei die Transaktionsanfrage ferner ein Geheimnis einschließt, das zwischen der Zielbasisstation und der nicht registrierten Basisstation geteilt wird.

10. Das Verfahren aus Anspruch 9, wobei das Geheimnis, geteilt zwischen der Zielbasisstation und der nicht registrierten Basisstation, mit Noncen verschlüsselt ist, die durch die nicht registrierte Basisstation und die Zielbasisstation, den Transaktionsidentifizierer, die Zielbasisstation ID, die Mobilstation ID und die nicht registrierte Basisstation ID gewählt wurden.

11. Das Verfahren aus Anspruch 4, wobei das Erhalten der Transaktionsantwort von der Zielbasisstation einschließt:
Berechnen, in der Zielbasisstation, eines Sitzungsschlüssels; und
Übertragen des Sitzungsschlüssels mit der Transaktionsantwort.

12. Das Verfahren aus Anspruch 11, wobei die Transaktionsantwort ein Geheimnis, das zwischen der Zielbasisstation und der nicht registrierten Basisstation geteilt wird und ein Geheimnis, das zwischen der Zielbasisstation und der Mobilstation geteilt wird, einschließt.

13. Das Verfahren aus Anspruch 12, wobei das Geheimnis, geteilt zwischen der Zielbasisstation und der nicht registrierten Basisstation, mit einer Nonce verschlüsselt ist, die durch die Mobilstation, eine Zielbasisstation ID, eine Mobilstation ID und eine nicht registrierte Basisstation ID gewählt wurde.

14. Das Verfahren aus Anspruch 12, wobei das Geheimnis, geteilt zwischen der Zielbasisstation und der Mobilstation, mit einer Nonce verschlüsselt ist, die durch die nicht registrierte Basisstation, eine Zielbasisstation ID, eine Mobilstation ID und eine nicht registrierte Basisstation ID gewählt wurde.

15. Das Verfahren aus Anspruch 11, wobei die Transaktionsantwort ein Geheimnis einschließt, das zwischen der Zielbasisstation und der Mobilstation geteilt wird.

16. Das Verfahren aus Anspruch 15, wobei das Geheimnis zwischen der Zielbasisstation und der Mobilstation mit einer Nonce verschlüsselt ist, die durch die nicht registrierte Basisstation, eine Zielbasisstation ID, eine Mobilstation ID und eine nicht registrierte Basisstation ID gewählt wurde.

17. Das Verfahren aus Anspruch 1, wobei das Durchführen von mehrfachsprungunterstützter Authentifizierung einschließt:
Bestimmen, ob eine Zahl von der mehrere Sprünge entfernten Basisstation größer als 1 ist;
Wählen der Basisstation, die die Identitätsantwort überträgt als die Zielbasisstation, wenn die mehrere Sprünge entfernte Basisstation nicht größer als 1 ist;
Bestimmen, ob die Zielbasisstation ein Geheimnis hat, welches mit der nicht registrierten Basisstation geteilt wird; und
Erzeugen eines mit der Mobilstation geteilten Sitzungsschlüssels basierend auf der von der Zielbasisstation erhaltenen Identitätsantwort, wenn die Zielbasisstation das Geheimnis hat, welches mit der nicht registrierten Basisstation geteilt wird.

18. Das Verfahren aus Anspruch 17, wobei das Durchführen von mehrfachsprungunterstützter Authentifizierung ferner einschließt:
Einrichten eines Geheimnisses, welches mit der Zielbasisstation geteilt werden soll, wenn die mehrere Sprünge entfernte Basisstation kein Geheimnis hat, das mit der nicht registrierten Basisstation geteilt wird.

19. Das Verfahren aus Anspruch 18, wobei das Durchführen von mehrfachsprungunterstützter Authentifizierung ferner einschließt:
Bestimmen, ob es unter den mehreren Sprüngen entfernten Basisstationen, die in der Identitätsantwort übertragen wurden eine Basisstation gibt, die ein Geheimnis hat, das mit der nicht registrierten Basisstation geteilt wird, wenn die Anzahl der mehrere Sprünge entfernten Basisstation größer als 1 ist; und
Wählen einer der mehrere Sprünge entfernten Basisstationen unter den mehreren Sprüngen entfernten Basisstationen, die ein Geheimnis mit der nicht registrierten Basisstation als Zielbasisstation teilt, wenn es wenigstens eine mehrere Sprünge entfernte Basisstation gibt, die das Geheimnis mit der nicht registrierten Basisstation teilt.

20. Das Verfahren aus Anspruch 19, wobei das Durchführen von mehrfachsprungunterstützter Authentifizierung ferner einschließt:
Wählen der nächsten Basisstation unter den mehrere Sprünge entfernten Basisstationen als Zielbasisstation, wenn es keine mehrere Sprünge entfernte Basisstation gibt, die ein Geheimnis mit der nicht registrierten Basisstation teilt.

21. Das Verfahren aus Anspruch 20, wobei das Erzeugen des Sitzungsschlüssels einschließt:
Weiterleiten der von der Zielbasisstation erhaltenen Identitätsantwort zur Mobilstation;
Erhalten einer Transaktionsanfrage von der MS als Reaktion auf die Identitätsantwort;
Weiterleiten der Transaktionsanfrage zur Zielbasisstation;
Erhalten einer Transaktionsantwort von der Zielbasisstation als Reaktion auf die Transaktionsanfrage;
Weiterleiten der Transaktionsantwort zur MS; und
Berechnen, in der nicht registrierten Basisstation und im mobilen Endgerät, des Sitzungsschlüssels mithilfe der Transaktionsantwort.

22. Das Verfahren aus Anspruch 21, wobei die Transaktionsanfrage einen Transaktionsidentifizierer, gewählt durch die Mobilstation, eine Mobilstation ID, eine nicht registrierte Basisstation ID, eine Zielbasisstation ID, und ein Geheimnis, geteilt zwischen der Zielbasisstation und der Mobilstation, einschließt.

23. Das Verfahren aus Anspruch 22, wobei der Transaktionsidentifizierer 256 Bits lang ist.

24. Das Verfahren aus Anspruch 22, wobei das Geheimnis, geteilt zwischen der Zielbasisstation und der Mobilstation, mit Noncen verschlüsselt ist, die durch die MS und die Zielbasisstation, den Transaktionsidentifizierer, die Mobilstation ID, die nicht registrierte Basisstation ID und die Zielbasisstation ID gewählt wurden.

25. Das Verfahren aus Anspruch 24, wobei jede Nonce 256 Bits lang ist.

26. Das Verfahren aus Anspruch 22, wobei die Transaktionsanfrage ferner ein Geheimnis einschließt, das zwischen der Zielbasisstation und der nicht registrierten Basisstation geteilt wird.

27. Das Verfahren aus Anspruch 26, wobei das Geheimnis, geteilt zwischen der Zielbasisstation und der nicht registrierten Basisstation, mit Noncen verschlüsselt ist, die durch die nicht registrierte Basisstation und die Zielbasisstation, den Transaktionsidentifizierer, die Zielbasisstation ID, die Mobilstation ID und die nicht registrierte Basisstation ID gewählt wurden.

28. Das Verfahren aus Anspruch 21, wobei das Erhalten der Transaktionsantwort von der Zielbasisstation einschließt:
Berechnen, in der Zielbasisstation, eines Sitzungsschlüssels; und
Übertragen des Sitzungsschlüssels mit der Transaktionsantwort.

29. Das Verfahren aus Anspruch 28, wobei die Transaktionsantwort ein Geheimnis, das zwischen der Zielbasisstation und der nicht registrierten Basisstation geteilt wird und ein Geheimnis, das zwischen der Zielbasisstation und der Mobilstation geteilt wird, einschließt.

30. Das Verfahren aus Anspruch 29, wobei das Geheimnis, geteilt zwischen der Zielbasisstation und der nicht registrierten Basisstation, mit einer Nonce verschlüsselt ist, die durch die Mobilstation, eine Zielbasisstation ID, eine Mobilstation ID und eine nicht registrierte Basisstation ID gewählt wurde.

31. Das Verfahren aus Anspruch 29, wobei das Geheimnis, geteilt zwischen der Zielbasisstation und der Mobilstation, mit einer Nonce verschlüsselt ist, die durch die nicht registrierte Basisstation, eine Zielbasisstation ID, eine Mobilstation ID und eine nicht registrierte Basisstation ID gewählt wurde.

32. Das Verfahren aus Anspruch 28, wobei die Transaktionsantwort ein Geheimnis einschließt, das zwischen der Zielbasisstation und der Mobilstation geteilt wird.

33. Das Verfahren aus Anspruch 32, wobei das Geheimnis, geteilt zwischen der Zielbasisstation und der Mobilstation, mit einer Nonce verschlüsselt ist, die durch die nicht registrierte Basisstation, eine Zielbasisstation ID, eine Mobilstation ID und eine nicht registrierte Basisstation ID gewählt wurde.

## Revendications

1. Procédé d'authentification pour un système distribué sans fil (500) comprenant:
la réception, par une station de base non enregistrée (321, 521), d'une demande d'authentification provenant d'une station mobile (310, 510),
la multidiffusion, par la station de base non enregistrée, d'une demande d'identité pour identifier la station mobile à une pluralité de stations de base dans le système distribué sans fil;
la réception, par la station de base non enregistrée, d'une réponse d'identité d'au moins une station de base (322, 522) parmi la pluralité de stations de base en réponse à la demande d'identité;
et
l'exécution, par la station de base non enregistrée, de l'authentification de la station mobile sur la base de la réponse d'identité,
dans lequel l'exécution de l'authentification de la station mobile comprend les opérations suivantes:
déterminer si ladite au moins une station de base est à un pas de la station de base non enregistrée ;
l'exécution d'une authentification prise en charge par le voisin si ladite au moins une station de base (322) est une station de base éloignée d'un saut; et
l'exécution d'une authentification à sauts multiples si ladite au moins une station de base (522) est une station de base éloignée de plus de deux sauts.

2. Procédé selon la revendication 1, dans lequel l'exécution de l'authentification prise en charge par le voisin comprend les opérations suivantes:
la détermination du fait qu'un nombre de stations de base éloignée d'un saut est supérieur à 1;
la sélection d'une station de base parmi les stations de éloignée d'un saut comme station de base cible si le nombre des stations de éloignée d'un saut est supérieur à 1; et
la création d'une clé de session partagée avec la station mobile sur la base de la réponse d'identité reçue de la station de base cible.

3. Procédé selon la revendication 2, dans lequel l'exécution de l'authentification prise en charge par le voisin comprend en outre :
la détermination de la station de base éloignée d'un saut comme station de base cible si le nombre de stations de base éloignées d'un saut n'est pas supérieur à 1.

4. Procédé selon la revendication 3, dans lequel la création de la clé de session comprend:
la transmission de la réponse d'identité reçue de la station de base cible à la station mobile;
la réception d'une demande de transaction de la station mobile en réponse à la réponse d'identité;
la transmission de la demande de transaction à la station de base cible;
la réception d'une réponse de transaction de la station de base cible en réponse à la demande de transaction;
la transmission de la réponse de transaction à la station mobile; et
le calcul, au niveau de la station de base non enregistrée et du terminal mobile, de la clé de session à l'aide de la réponse de la transaction.

5. Procédé selon la revendication 4, dans lequel la demande de transaction comprend un identificateur de transaction choisi par la station mobile, un ID de station mobile, un ID de station de base non enregistré, un ID de station de base cible, et un secret partagé entre la station de base cible et la station mobile.

6. Procédé selon la revendication 5, dans lequel l'identificateur de transaction a une longueur de 256 bits.

7. Procédé selon la revendication 5, dans lequel le secret partagé entre la station de base cible et la station mobile est crypté avec des nonces choisis par le terminal mobile et la station de base cible, l'identificateur de transaction, l'ID de la station mobile, l'ID de la station de base non enregistrée et l'ID de la station de base cible.

8. Procédé selon la revendication 7, dans lequel chaque nonce a une longueur de 256 bits.

9. Procédé selon la revendication 5, dans lequel la demande de transaction comprend en outre un secret partagé entre la station de base cible et la station de base non enregistrée.

10. Procédé selon la revendication 9, dans lequel le secret partagé entre la station de base cible et la station de base non enregistrée est crypté avec des nonces choisis par la station de base non enregistrée et la station de base cible, l'identificateur de transaction, l'ID de la station de base cible, l'ID de la station mobile et l'ID de la station de base non enregistrée.

11. Procédé selon la revendication 4, dans lequel la réception de la réponse de transaction de la station de base cible comprend:
le calcul, au niveau de la station de base cible, d'une clé de session; et
la transmission de la clé de session avec la réponse à la transaction.

12. Procédé selon la revendication 11, dans lequel la réponse de transaction comprend un secret partagé entre la station de base cible et la station de base non enregistrée et un secret partagé entre la station de base cible et la station mobile.

13. Procédé selon la revendication 12, dans lequel le secret partagé entre la station de base cible et la station de base non enregistrée est crypté avec un nonce choisi par la station mobile, un ID de station de base cible, un ID de station mobile et un ID de station de base non enregistrée.

14. Procédé selon la revendication 12, dans lequel le secret partagé entre la station de base cible et la station mobile est crypté avec un nonce choisi par la station de base non enregistrée, un ID de station de base cible, un ID de station mobile, et un ID de station de base non enregistrée.

15. Procédé selon la revendication 11, dans lequel la réponse de transaction comprend un secret partagé entre la station de base cible et la station mobile.

16. Procédé selon la revendication 15, dans lequel le secret entre la station de base cible et la station mobile est crypté avec un nonce choisi par la station de base non enregistrée, un ID de station de base cible, un ID de station mobile, un ID de station de base non enregistré.

17. Procédé selon la revendication 1, dans lequel l'exécution de l'authentification prise en charge par plusieurs sauts comprend les opérations suivantes:
déterminer si un nombre de la station de base à sauts multiples est supérieur à 1;
sélectionner la station de base ayant transmis la réponse d'identité comme station de base cible si la station de base à sauts multiples n'est pas supérieure à 1 ;
déterminer si la station de base cible a un secret partagé avec la station de base non enregistrée; et
créer une clé de session partagée avec la station mobile sur la base de la réponse d'identité reçue de la station de base cible si la station de base cible contient le secret partagé avec la station de base non enregistrée.

18. Procédé selon la revendication 17, dans lequel l'exécution de l'authentification prise en charge à sauts multiples comprend en outre:
l'établissement d'un secret à partager avec la station de base cible si la station de base à sauts multiples n'a pas de secret partagé avec la station de base non enregistrée.

19. Procédé selon la revendication 18, dans lequel l'exécution de l'authentification à sauts multiples prise en charge comprend en outre les opérations suivantes:
déterminer s'il existe une station de base quelconque ayant un partage de secret avec la station de base non enregistrée parmi les stations de base à sauts multiples, transmettre les réponses d'identité si le nombre de stations de base à sauts multiples est supérieur à 1 ; et
sélectionner l'une des stations de base à sauts multiples parmi les stations de base à sauts multiples ayant le secret partagé avec les stations de base non enregistrées comme station de base cible s'il y a au moins une station de base à sauts multiples partageant le secret avec la station de base non enregistrée.

20. Procédé selon la revendication 19, dans lequel l'exécution de l'authentification à sauts multiples supportée comprend en outre:
la sélection d'une station de base la plus proche parmi les stations de base à sauts multiples comme station de base cible s'il n'y a pas de station de base à sauts multiples partageant un secret avec la station de base non enregistrée.

21. Procédé selon la revendication 20, dans lequel la création de la clé de session comprend:
le transfert de la réponse d'identité reçue de la station de base cible à la station mobile;
la réception d'une demande de transaction de la station mobile en réponse à la réponse d'identité;
le transfert de la demande de transaction à la station de base cible;
la réception d'une réponse de transaction de la station de base cible en réponse à la demande de transaction;
le transfert de la réponse de transaction à la station mobile; et
le calcul, au niveau de la station de base non enregistrée et du terminal mobile, de la clé de session à l'aide de la réponse de la transaction.

22. Procédé selon la revendication 21, dans lequel la demande de transaction comprend un identificateur de transaction choisi par la station mobile, un ID de station mobile, un ID de station de base non enregistré, un ID de station de base cible et un secret partagé entre la station de base cible et la station mobile.

23. Procédé selon la revendication 22, dans lequel l'identificateur de transaction a une longueur de 256 bits.

24. Procédé selon la revendication 22, dans lequel le secret partagé entre la station de base cible et la station mobile est crypté avec des nonces choisies par la MS et la station de base cible, l'identificateur de transaction, l'ID de station mobile, l'ID de station de base non enregistrée et l'ID de station de base cible.

25. Procédé selon la revendication 24, dans laquelle chaque nonce a une longueur de 256 bits.

26. Procédé selon la revendication 22, dans lequel la demande de transaction comprend en outre un secret partagé entre la station de base cible et la station de base non enregistrée.

27. Procédé selon la revendication 26, dans lequel le secret partagé entre la station de base cible et la station de base non enregistrée est crypté avec des nonces choisis par la station de base non enregistrée et la station de base cible, l'identificateur de transaction, l'ID de station de base cible, l'ID de station mobile et l'ID de station de base non enregistrée.

28. Procédé selon la revendication 21, dans lequel la réception de la réponse de transaction de la station de base cible comprend:
le calcul, au niveau de la station de base cible, d'une clé de session; et
la transmission de la clé de session avec la réponse à la transaction.

29. Procédé selon la revendication 28, dans lequel la réponse de transaction comprend un secret partagé entre la station de base cible et la station de base non enregistrée et un secret partagé entre la station de base cible et la station mobile.

30. Procédé selon la revendication 29, dans lequel le secret partagé entre la station de base cible et la station de base non enregistrée est crypté avec un nonce choisi par la station mobile, un ID de station de base cible, un ID de station mobile, un ID de station de base non enregistrée.

31. Procédé selon la revendication 29, dans lequel le secret partagé entre la station de base cible et la station mobile est crypté avec un nonce choisi par la station de base non enregistrée, un ID de station de base cible, un ID de station mobile, un ID de station de base non enregistrée.

32. Procédé selon la revendication 28, dans lequel la réponse de transaction comprend un secret partagé entre la station de base cible et la station mobile.

33. Procédé selon la revendication 32, dans lequel le secret partagé entre la station de base cible et la station mobile est crypté avec un nonce choisi par la station de base non enregistrée, un ID de station de base cible, un ID de station mobile, un ID de station de base non enregistré.
